# EUROPÄISCHE PATENTANMELDUNG

(11) **EP 1 129 761 A2**
(43) Veröffentlichungstag der Anmeldung: **05.09.2001**
(21) Anmeldenummer: 01104869.1
(22) Anmeldetag: 28.02.2001
(51) Int. Cl.: B01D 46/52, B01D 29/07

(54) **Filterelement**

(30) Priorität: 04.03.2000 DE 10010710
(71) Anmelder: FILTERWERK MANN & HUMMEL GMBH, 71638 Ludwigsburg (DE)
(72) Erfinder: Schwinghammer, Alfons, 84130 Dingolfing (DE)
(74) Vertreter: Voth, Gerhard, Dipl.-Ing.

(57) **Zusammenfassung**

Es wird ein Filterelement 10 vorgeschlagen, das zum Reinigen von Fluiden dient. Das Filterelement 10 umfasst ein Filtermedium 11, eine Einfassung 12 und einen Stab 13. Das Filtermedium 11 verfügt über Falten 14, welche zickzack-förmig ausgeführt sein können und eine Faltenhöhe 15 und eine Faltenfläche 16 besitzen. Senkrecht zu den Falten 14 verlaufen Stirnseiten 17, diese stellen die Falten 14 in ihrem Verlauf dar. An den Stirnseiten 17 ist die Einfassung 12 angeordnet. Zur Halterung der Falten 14 ist der Stab 13 durch die Faltenfläche 16 der Falten 14 hindurchgestochen, wodurch Verbindungsstellen 19 entstehen. Diese Verbindungsstellen 19 sind durch zusätzliche Dichtungen oder durch Bauteileigenschaften abgedichtet.

## Beschreibung

Die Erfindung betrifft ein Filterelement nach dem Oberbegriff des Patentanspruches 1. Außerdem betrifft die Erfindung ein Verfahren zur Herstellung eines Filterelementes nach Patentanspruch 9.

Es ist aus der DE 198 16 238 ein plattenförmiges Filterelement bekannt, welches eine Versteifungsleiste für ein zick-zack-förmig gefaltetes Filtermedium aufweist. Diese Versteifungsleiste bewirkt eine Lagefixierung der Falten zueinander. Hierzu ist die Versteifungsleiste als Kamm ausgebildet, wobei der Kamm einen durchgehenden Steg und von diesem Steg ausgehende Zähne aufweist. Die Zähne dienen zur formschlüssigen Aufnahme der Falten. Zum kraftschlüssigen Einspannen der Falten sind Federklammern vorgesehen, welche durch benachbart angeordnete Zähne gebildet werden. Der Steg der Versteifungsachse ist in der von den Zähnen aufgespannten Längsebene elastisch und biegsam. Gegen seitliches Ausknicken weist die Versteifungsleiste einen erheblich größeren Widerstand auf.

Der Kamm ist jedoch durch seine Zähne und die, durch die Zähne gebildeten Federklammern ein Bauteil, welches in der Herstellung aufwendig und teuer ist . Außerdem müssen die Zähne exakt auf die Falten des Filterelementes abgestimmt sein, wodurch für Filterelemente mit anderen Faltenhöhen oder Faltenabständen ein separater Kamm notwendig ist. Weiterhin kann der Kamm aufgrund seiner Geometrie nur für ein Filterelement einer Länge eingesetzt werden. Für Filterelemente anderer Länge sind wiederum andere Kämme notwendig.

Aufgabe der Erfindung ist es daher, ein Filterelement mit Falten und einem Mittel zur Halterung der Falten zu schaffen, wobei das Mittel zur Halterung der Falten aus einem einfachen, variabel einsetzbaren und kostengünstigen Halbzeug besteht und die Falten zuverlässig abstützt.

Diese Aufgabe wird durch die Merkmale des Patentanspruches 1 gelöst.

Das erfindungsgemäße Filterelement wird durch ein Filtermedium, welches Falten aufweist, eine Einfassung, welche an Stirnseiten angeordnet ist, und ein Mittel zur Halterung der Falten gebildet. Es ist in vorteilhafter Weise geeignet, die Falten durch das Mittel zur Halterung zuverlässig abzustützen, wobei das Mittel zur Halterung aus einem einfachen, variabel einsetzbaren und kostengünstigen Halbzeug besteht .

Das Filtermedium verfügt über Falten, welche Faltenfläche und Faltenhöhen aufweisen, und Stirnseiten, welche rechtwinklig zu den Falten verlaufen und die Falten in ihrem Faltenverlauf darstellen. Die Faltenhöhe der Falten kann bei diversen Faltungen variieren, so ist z.B. eine w-förmige Faltung denkbar, bei der nur jede zweite Falte dieselbe Faltenhöhe aufweist. Andere Faltungen, welche das Filterelement z.B. in Segmente einteilen, können in einem Segment Falten gleicher Faltenhöhe aufweisen und in einem anschließenden Segment kann die Faltenhöhe größer oder kleiner sein.

Die Einfassung ist an den Stirnseiten angeordnet, wodurch eine Fixierung der Falten an den Stirnseiten realisiert werden kann. Um die Falten zu Fixieren ist ein Material notwendig, welches Belastungen durch ein durchströmendes Fluid Stand hält. Hierzu kann die Einfassung aus z.B. einem thermoplastischen Kunststoff oder einem Elastomer bestehen.

Das Mittel zur Halterung der Falten wird durch einen Stab gebildet, welcher durch die Faltenfläche der Falten des Filtermediums gestochen wird. Hierbei entstehen zwischen dem Stab und dem Filtermedium Verbindungsstellen. Durch das Durchstechen des Stabes durch die Faltenfläche der Falten werden die Falten an den Verbindungsstellen in ihrer Faltenhöhe gehalten, wobei die Falten axial beweglich auf dem Stab angeordnet sind. Der Stab kann eine beliebige Querschnittsfläche in Form und Größe aufweisen. Außerdem kann der Stab eine glatte oder strukturierte Oberfläche aufweisen. Strukturierte Oberflächen können z.B. in Form von Rillen oder Erhebungen längs oder quer zur Stabachse ausgebildet sein, weiterhin können strukturierte Oberflächen nur in einem Teilbereich der Oberfläche oder auf der gesamten Oberfläche angeordnet sein. Die Querschnittsfläche des Stabes kann z.B. quadratisch, rechteckig, dreieckig, sechseckig ausgeführt sein, wobei die Größe der Querschnittsfläche frei gewählt werden kann. Hierbei ist es sinnvoll, dass sie in Abhängigkeit der Faltenfläche gewählt ist. Bei kleinen Faltenflächen sollte die Querschnittsfläche des Stabes klein und bei großen Falten kann die Querschnittsfläche des Stabes groß gewählt werden. Weiterhin kann der Stab so ausgeführt sein, dass er biegbar ist, wodurch er unterschiedlichen Kurven, wie z.B. einem Kreis oder Bogenformen folgen kann. Je nach Einsatzgebiet ist die Festigkeit des Stabes zu wählen. Ist ein starres Filterelement erforderlich, so wählt man einen hochfesten Stab, ist ein flexibles Filterelement erforderlich, so wählt man einen Stab mit einer geringen Festigkeit. Wenn das Filterelement eine größere Stabilität benötigt, als die Einfassung an den Stirnseiten und ein einziger Stab bietet, so können auch mehrere Stäbe durch das Filtermedium gestochen werden. Dies bewirkt eine erhebliche Erhöhung der Stabilität. Die Halterung der Falten mit einem einzelnen Stab oder mehreren Stäben, kann bei Filterelementen unterschiedlichster Formen wie z.B. rechteckig, dreieckig, rund, abgeschrägt, zylindrisch, oval eingesetzt werden.

Da das Mittel zur Halterung der Falten als Stab ausgeführt ist, kann der Stab universell für verschiedene Faltenhöhen und Faltenabstände eingesetzt werden. Außerdem ist der Stab ein kostengünstiges Halbzeug, das je nach benötigter Länge abgeschnitten werden kann. Wird z.B. ein Stab von einem Keuel abgewickelt, so kann dadurch ein kontinuierlichen Fertigungsprozess realisiert werden, wodurch die Wirtschaftlichkeit der Fertigung erhöht wird. Hierbei ist eine Vorrichtung vorzusehen, welche den Stab an einer definierten Stelle durchtrennt. Je nachdem, welche Eigenschaften der Stab aufweisen soll, kann er z.B. in Metall oder Kunststoff ausgeführt sein.

Das Filtermedium kann z.B. aus Filterpapier bestehen, welches behandelt sein kann. Damit das Filtermedium beim Durchstechen des Stabes keine undefinierten Risse erhält, kann das Filtermedium ein eingestanztes Loch aufweisen, durch welches dann der Stab hindurch gestochen wird. Dieses Loch kann mir seiner Innenkontur etwas kleiner gewählt werden als eine Außenkontur des Stabes. Dadurch legt sich das Filtermedium dicht an den Stab an. Bei einem Loch, das eine größere Innenkontur aufweist, als die Außenkontur des Stabes ist, kann eine Dichtung auf den Stab aufgefädelt werden, welche eine Abdichtung zwischen Filtermedium und Stab bewirken.

Andere Filtermedien, die z.B. Fasern mit einer Faserstruktur aufweisen, können von dem Stab direkt durchstochen werden, da die Fasern durch den Stab zur Seite gedrängt werden und die Faserstruktur sich dichtend an den Stab anlegt.

Eine vorteilhafte Ausbildung des Erfindungsgedankens besteht darin, die Falten zick-zack-förmig auszubilden, wobei alle Falten des Filtermediums die selbe Faltenhöhe aufweisen. Bei dieser Ausführung können die Falten immer in der selben Höhe durchstochen werden, wodurch jede Falte den selben Halt erhält. Bei Falten unterschiedlicher Faltenhöhe wird die höhere Falte z.B. im unteren Faltenbereich durchstochen und die niedrigere Falte im oberen Faltenbereich, wodurch eine unterschiedliche Festigkeit der Falten erzeugt wird.

Es ist vorteilhaft, dass der Stab mittig der Faltenhöhe durch die Falten hindurch gestochen wird. Dadurch erhalten die Falten einen gleichmäßigen Halt. Durch die mittige Anordnung des Stabes kann das Filtermedium pulsierenden Fluidströmen einen größeren Widerstand entgegensetzen, da die Falten in beiden Richtungen denselben Halt aufweisen.

Eine besondere Ausführungsform der Erfindung sieht für das Filtermedium die Verwendung eines Kunststoffvlies vor. Dies hat den Vorteil, dass die Kunststofffasern durch den Stab auseinander gedrückt werden und sich dicht an den Stab anlegen, wodurch eine Abdichtung ohne eine zusätzliche Dichtung erfolgt.

Gemäß einer weiteren Ausgestaltung der Erfindung weist der Stab eine runde Querschnittsfläche auf. Dies ermöglicht die beste Abdichtung zwischen dem Filtermedium und dem Stab. Außerdem ist ein Stab mit einer runden Querschnittsfläche kostengünstig, einfach zu verarbeiten und stabil.

Es ist vorteilhaft, die Verbindungsstellen zwischen dem Stab und den Falten ortsfest zu fixieren, wodurch sich die Falten auf dem Stab nicht mehr hin und her bewegen können. Diese Fixierung kann z.B. mit einem Klebstoff erfolgen, welcher auf die Verbindungsstellen aufgetragen wird. Eine weitere Möglichkeit besteht in der Verwendung eines Heißklebers, welcher auf den Stab aufgebracht ist. Erst nachdem der Stab durch die Falten hindurchgestochen ist, wird dem Heißkleber die zur Reaktion notwendige Wärmeenergie zugeführt, wobei die Wärmeenergie von außen, durch z.B. einen Ofen zugeführt wird. Dadurch wird das Filtermedium nur an den Verbindungsstellen mit dem Stab fest verbunden, wobei die Filterfläche, welche keinen Kontakt mit dem Stab aufweist, nicht durch überschüssig aufgetragenen Klebstoff zugesetzt wird.

Eine vorteilhafte Ausbildung des Erfindungsgedankens ist die Verwendung eines Stabes, welcher elektrisch leitend ist. Durch einen elektrisch leitenden Stab aus z.B. Metall kann durch Einleiten von Spannung Wärme erzeugt werden. Diese Wärme kann z.B. zur Erzeugung der Reaktionswärme für den Heißkleber genutzt werden.

Eine weitere Variante der Erfindung besteht in der Verwendung eines Stabes aus Kunststoff. Dieser Stab kann durch Auftragen von Klebstoff oder einem Heißkleber mit dem Filtermedium verbunden werden. Damit der Stab aus Kunststoff elektrisch leitend wird, können Zusätze wie z.B. Metallpulver, Ruß oder Grafit dem Kunststoff beigemischt werden. Somit kann der Heißkleber auch durch Einleiten von Spannung in den Stab aus Kunststoff auf Reaktionstemperatur gebracht werden.

Eine vorteilhafte Ausführung der Erfindung sieht vor, dass die Verbindungsstellen des Stabes mit dem Filtermedium durch Schmelzzonen gebildet werden, wobei durch die, im Stab vorhandene Temperatur entweder der Stab und / oder das Filtermedium, sofern es aus einem aufschmelzbaren Werkstoff besteht, angeschmolzen wird und sich, nachdem der Kunststoff abgekühlt ist, eine Verbindungsstelle bildet, welche das Filtermedium dichtend mit dem Stab verbindet. Hierbei kann der Stab nur in einer äußeren Umfangsschicht angeschmolzen sein und einen durchgehenden Stabkern aufweisen. Der Stabkern bietet also eine Abstützung des Filtermediums. Durch die angeschmolzene Umfangsschicht kann das Filtermedium, ohne aufzuschmelzen, sich mit dem Stab verbinden. Bei einer anderen Werkstoffpaarung kann jedoch auch das Filtermedium anschmelzen und sich mit dem Stab dichtend verbinden.

Der Stab kann auch ganz durchgeschmolzen sein und nur noch aus Stabstücken bestehen, wodurch kein durchgängiger Bereich des Stabes mehr vorhanden ist. Bei dieser Ausführung stützen sich dann die Stabstücke an dem Filtermedium ab und bewirken somit eine Beabstandung der Falten zueinander.

Ein Verfahren zur Erzeugung eines Filterelementes, bei dem ein Stab aus Kunststoff die Halterung der Falten bildet und die Verbindungsstellen als Schmelzzonen ausgeführt sind, besteht in der Verwendung einer Vorrichtung, welche das Filtermedium faltet und den Stab hindurchsticht. Die Vorrichtung ist mehrteilig ausgeführt. Im wesentlichen besitzt sie ein Formunterteil, ein Formoberteil und Spannungsanschlüsse. Das Formunterteil enthält einen unteren Faltenformbereich, welcher gemeinsam mit dem oberen Faltenformbereich des Formoberteils die Faltenkontur bilden. Das Filtermedium wird bei beabstandet angeordneten Formhälften, welche durch das Formunterteil und das Formoberteil gebildet werden, auf das Formunterteil aufgelegt. Anschließend werden die Formhälften unter definierten Bedingungen auf einander aufgesetzt, so dass das Filtermedium in den gefalteten Zustand gebracht wird. Anschließend wird der Stab durch die Falten gestochen. Um das Filtermedium mit dem durchgestochenen Stab aus der Vorrichtung zu entnehmen, können die Formhälften unterschiedlich ausgebildet sein. Eine Variante besteht darin, in beiden Formhälften eine Aussparung vorzusehen, die eine ausreichende Breite aufweist, um den Stab aufzunehmen. Dadurch kann nach der Bearbeitung das Filtermedium mit dem Stab entnommen werden. Eine weitere Möglichkeit das Filtermedium mit dem Stab zu entnehmen wird durch eine zweiteilige Ausführung der Formhälften mit einem linken Formsegment und einem rechten Formsegment erzielt. Bis die Falten des Filtermediums erzeugt sind, liegen beide Formsegmente der unteren Formhälfte und beide Formsegmente der oberen Formhälfte aneinander an. Nachdem die Falten erzeugt wurden, werden die beiden Teile der unteren und der oberen Formhälfte durch eine Bewegungseinheit auseinander bewegt, wodurch ein Abstand erzeugt wird. Dieser Abstand wird gerade so groß gewählt, dass der Stab beim Durchstechen hindurchgleiten kann. Bei dieser Ausführung bieten die beiden Formsegmente der Formhälften eine ausreichende Abstützung des Filtermediums, damit sich die Falten beim Durchstechen nicht nennenswert verformen.

Nachdem der Stab durch die Falten des Filtermediums hindurchgestochen ist, werden die beiden Enden des Stabes mit den Spannungsanschlüssen verbunden. Anschließend wird Spannung angelegt, wodurch sich der Stab aus Kunststoff erwärmt. Durch diese Erwärmung schmilzt der Kunststoff des Stabes auf und bildet die Schmelzzonen zwischen dem Stab und dem Filtermedium. Nachdem die Schmelzzonen ausreichend abgekühlt sind, hebt die obere Formhälfte von der unteren Formhälfte ab, was selbstverständlich automatisiert sein kann, und das gefaltete Filterelement mit dem Stab kann entnommen werden.

Eine bevorzugte Ausführung der Vorrichtung enthält noch Komponenten, welche eine automatisierte Anbringung der Einfassung vorsieht.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnungen

Weitere Einzelheiten der Erfindung werden nachfolgend anhand der Zeichnungen erläutert.

Hierbei zeigt
- Figur 1: ein Filterelement in perspektivischer Ansicht,
- Figur 2: ein zylindrisches Filterelement in perspektivischer Ansicht,
- Figur 3: eine Vorrichtung in perspektivischer Ansicht,
- Figur 4: eine Vorrichtung in der Vorderansicht und
- Figur 5: eine Vorrichtung in der Seitenansicht.

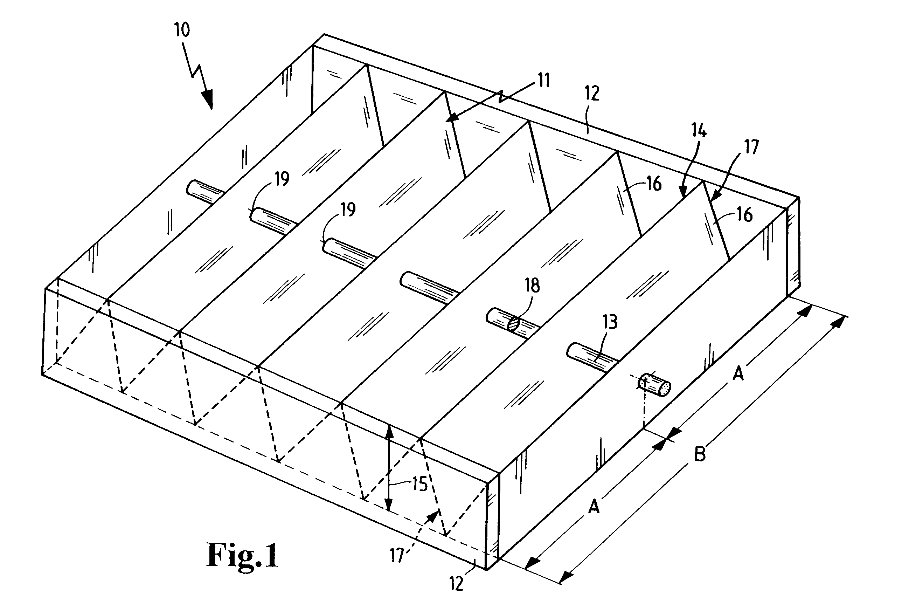

In Figur 1 ist ein rechteckförmiges Filterelement 10 dargestellt. Dieses Filterelement 10 weist ein Filtermedium 11, eine Einfassung 12 und einen Stab 13 auf. Das Filtermedium 11 besitzt zick-zack-förmig ausgebildete Falten 14 mit definierten Faltenhöhen 15 und Faltenflächen 16. Rechtwinklig zu den Falten 14 verlaufen Stirnseiten 17. Die Stirnseiten 17 stellen die Falten 14 in ihrem Verlauf dar und beschränken das Filtermedium 11 in seiner Breite B. Die Breite B verläuft parallel zu den Falten. Die Einfassung 12 ist an den Stirnseiten 17 angeordnet und bildet somit einen Abschluss des Filterelementes 10. Bei diesem Ausführungsbeispiel besteht die Einfassung 12 aus einer Elastomermischung, welche dichtend mit dem Filtermedium 11 verbunden ist und die Falten 14 in ihrem Konturverlauf fixiert.

Der Stab 13 weist eine kreisförmige Querschnittsfläche 18 auf und ist mittig der Faltenhöhe 15 angeordnet, wodurch eine optimale Abstützung der Falten in sich erzeugt wird. Um die Falten zueinander in einem definierten Abstand zu halten, ist der Stab 13 mittig zwischen beiden Teilen der Einfassung 12 angeordnet, was durch den Abstand A dargestellt ist, wobei A gleich B/2 entspricht. Bei sehr breiten Filterelementen kann es erforderlich sein, mehrere Stäbe 13 einzubringen, welche gleiche oder unterschiedliche Abstände untereinander und zu der Einfassung 12 aufweisen können.

Der Stab 13 bildet gemeinsam mit dem Filtermedium 11 Verbindungsstellen 19. Bei dieser Ausführung entsprechen die Verbindungsstellen 19 den Schmelzzonen, welche durch Aufschmelzen des Stabes 13 und des Filtermediums 11 gebildet werden. Die Verbindungsstellen 19 sind derart gestaltet, dass der Stab 13 mit dem Filtermedium 11 eine dichte Verbindungsstelle 19 bildet, wobei die Verbindungsstelle 19 mindestens so dicht, wie das Filtermedium 11 sein muss, damit keine ungefilterten Schmutzpartikel durch das Filterelement 10 hindurch gelangen können.

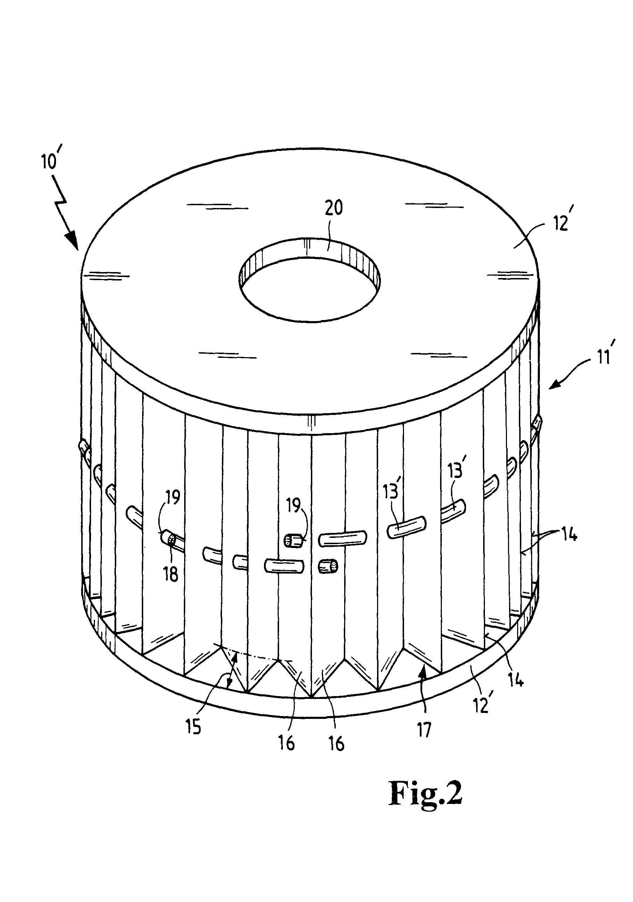

In Figur 2 ist ein zylindrisches Filterelement 10' dargestellt, welches analog zu Figur 1 aufgebaut ist. Die Einfassung 12' ist zweiteilig und rund ausgeführt, wobei mindestens ein Teil der Einfassung 12'eine zentral angeordnete kreisförmige Öffnung 20 aufweist. Die Einfassung 12'ist dichtend mit dem Filtermedium 11' verbunden. Beim Durchstechen des Stabes 13 durch die Falten 14 des Filtermediums 11 'ist hierbei jedoch zu beachten, dass der Stab 13'radial, in einer Spirale geführt werden muss. Dies kann durch einen bereits vorgeformten Stab 13'erfolgen oder der Stab 13'wird beim Durchstechen in die erforderliche Kontur gebracht.

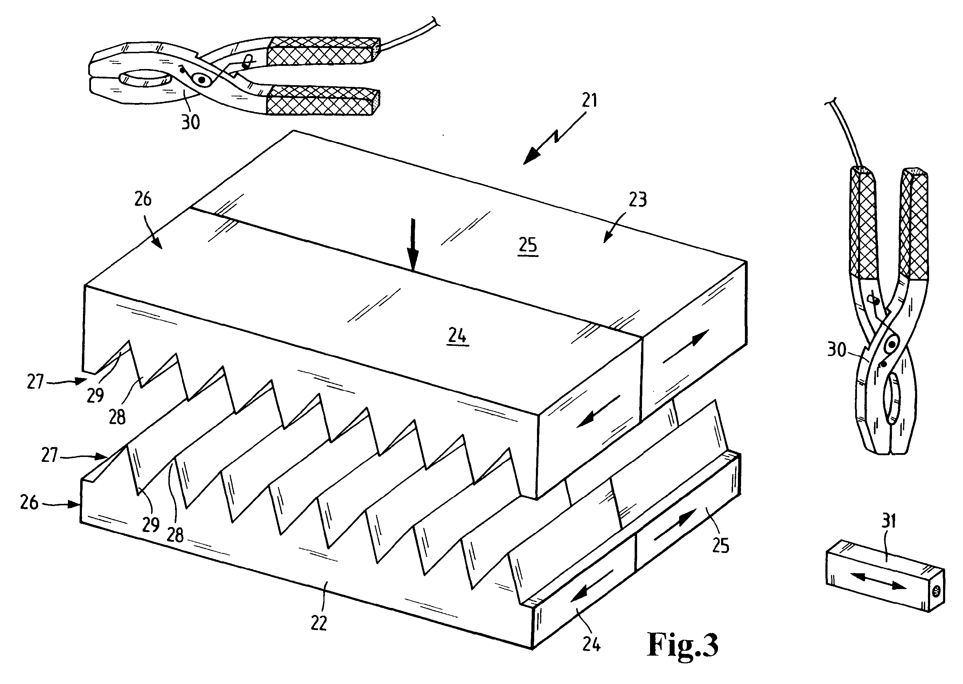

In Figur 3 ist eine Vorrichtung 21 in perspektivischer Ansicht dargestellt. Die Vorrichtung 21 weist eine untere Formhälfte 22 und eine oberer Formhälfte 23 auf. Jede Formhälfte 22, 23 besteht aus einem linken Formsegment 24 und einem rechten Formsegment 25. Die Formsegmente 24, 25 der Formhälften 22, 23 können mit einem Antrieb (nicht dargestellt) zusammengefahren werden, so dass die beiden Formsegmente 24 und 25 der oberen Formhälfte 23, sowie die Formsegmente 24 und 25 der unteren Formhälfte 22 aneinander angrenzen. Der Antrieb (nicht dargestellt) kann auch zum Auseinanderfahren der Formsegmente 24 und 25 dienen.

Die Formhälften 22, 23 weisen einen Plattenbereich 26 und einen Formbereich 27 auf. Der Plattenbereich 26 dient der Kraftübertragung zum Prägen der Falten 14 gemäß Figur 1. Er kann Befestigungseinheiten (nicht dargestellt) wie z.B. Nuten, Gewinde oder Haken aufweisen, welche die Montage der Formhälften 22, 23 in z.B. eine Presse ermöglichen. Der Formbereich 27 weist Spitzen 28 und Täler 29 auf, welche die Falten 14 gemäß Figur 1 beschreiben. Die Spitzen 28 der unteren Formhälfte 22 sind über den Tälern 29 der oberen Formhälfte 23 angeordnet und die Täler 29 der unteren Formhälfte 22 sind über den Spitzen 28 der oberen Formhälfte 23 angeordnet. Dadurch können die Formhälften 22, 23 aufeinander aufgesetzt werden und erzeugen die Falten 14 des Filtermediums 11.

Weitere Bauteile der Vorrichtung 21 bilden zwei Spannungsanschlüsse 30 und eine Stabführung 31. Die Spannungsanschlüsse 30 werden mit dem durchgestochenen Stab 13 gemäß Figur 1 verbunden, wodurch Spannung in dem Stab 13 erzeugt werden kann, welche den Stab 13 erwärmt. Die Spannungsanschlüsse 30 sind für unterschiedliche Spannungen und Stromstärken ausgelegt, da diese Größen in Abhängigkeit von Material und Querschnittsfläche 18 des Stabes 13 eingestellt werden müssen. Diese Einstellungen können z.B. direkt am Stromerzeuger oder an einem Transformator eingestellt werden.

Die Stabführung 31 ist derart angeordnet, dass der Stab 13 eine ausreichende Führung erhält und beim Durchstechen nicht ausknickt. Diese Stabführung 31 kann ortsfest oder beweglich angeordnet sein.

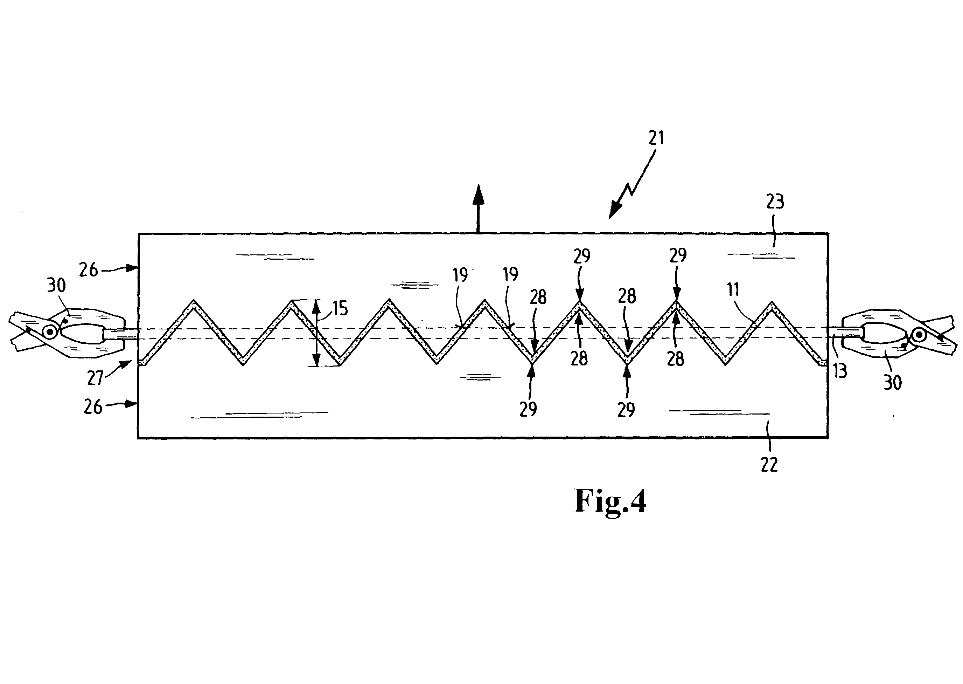

In Figur 4 ist die Vorrichtung 21 in der Vorderansicht dargestellt. Die obere Formhälfte 23 ist mit der unteren Formhälfte 22 in einer Geschlossenstellung dargestellt, wobei sich das Filtermedium 11 zwischen den geschlossenen Formhälften 22, 23 befindet. Durch die Geschlossenstellung der Formhälften 22, 23 erhält das Filtermedium 11 seine Falten 14. In dieser Geschlossenstellung wird der Stab 13 durch das Filtermedium 11 gestochen. Anschließend werden die Spannungsanschlüsse 30 mit dem Stab 13 verbunden und mit Spannung beaufschlagt. Durch die Spannung erwärmt sich der Stab 13 und verschmilzt an den Verbindungsstellen 19 mit dem Filtermedium 11. Nachdem die Verbindungsstellen 19 und der Stab 13 ausreichend erkaltet sind, so dass eine stabile Verbindung entstanden ist, werden die obere und die untere Formhälfte 22, 23 voneinander getrennt und das Filterelement 10 kann entnommen werden. Zum Trennen der Formhälften 22, 23 voneinander kann eine Formhälfte 22, 23 fest stehen und die jeweils andere Formhälfte 22, 23 bewegt werden oder beide Formhälften 22, 23 sind beweglich ausgeführt.

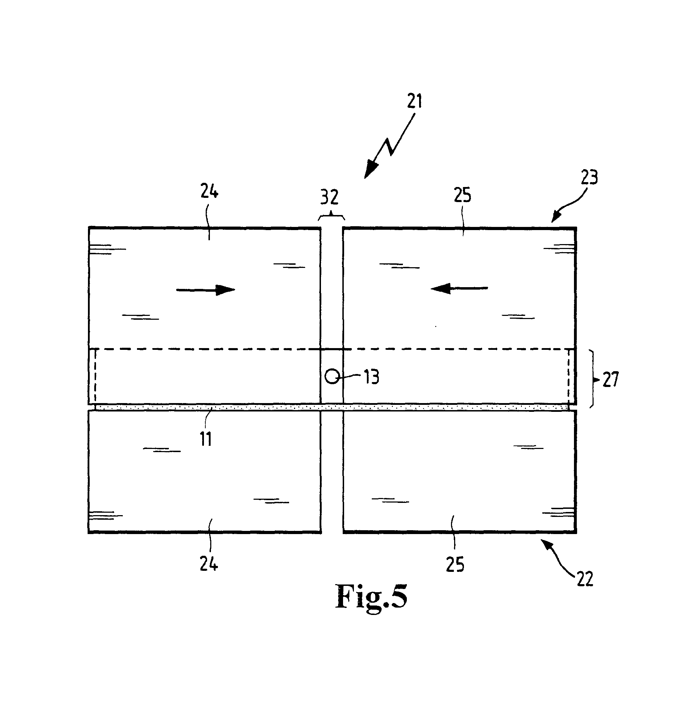

In Figur 5 ist eine Vorrichtung 21 mit eingelegten Filtermedium11 in geschlossenem Zustand in der Seitenansicht dargestellt. Hierbei sind die Formsegmente 24, 25 mit einem Abstand 32 dargestellt, wobei der Abstand 32 der Formsegmente 24, 25 voneinander derart gewählt ist, dass der Stab 13 hindurchgestochen werden kann, ohne dass dabei zu große Reibkräfte entstehen oder das Filtermedium 11 zu stark verformt wird. Der Abstand 32 kann ständig vorhanden sein, auch beim Falten, oder erst nach dem Falten, durch auseinander bewegen der Formsegmente 24, 25 erzeugt werden.

## Patentansprüche

1. Filterelement 10, zur Reinigung eines Fluides, aufweisend zumindest
- ein Filtermedium 11, welches über Falten 14 mit Faltenflächen 16 verfügt,
- eine Einfassung 12, welche auf Stirnseiten 17 der Falten 14 angebracht ist und
- ein Mittel zur Halterung der Falten 14, **dadurch gekennzeichnet, daß** das Mittel zur Halterung der Falten 14 durch mindestens einen Stab 13 gebildet ist, welcher durch die Faltenflächen 16 der Falten 14 hindurch gestochen ist, wobei Verbindungsstellen 19 zwischen dem Stab 13 und den Falten 14 abgedichtet sind.

2. Filterelement 10 nach Anspruch 1, **dadurch gekennzeichnet, daß**
die Falten 14 des Filtermediums 11 zick-zack-förmig ausgebildet sind und eine definierte Faltenhöhe 15 besitzen.

3. Filterelement 10 nach Anspruch 2, **dadurch gekennzeichnet, daß**
der Stab 13 etwa mittig der Faltenhöhe 15 durch die Faltenfläche 16 des Filtermediums 11 hindurch gestochen ist.

4. Filterelement 10 nach einem der Ansprüche 1 bis 3, **dadurch gekennzeichnet, daß**
das Filtermedium 11 ein Kunststoffvlies ist.

5. Filterelement 10 nach einem der Ansprüche 1 bis 4, **dadurch gekennzeichnet, daß**
der Stab 13 eine runde Querschnittsfläche 18 aufweist.

6. Filterelement 10 nach einem der vorangehenden Ansprüche, **dadurch gekennzeichnet, daß**
die Verbindungsstellen 19 zwischen dem Stab 13 und den Falten 14 durch den Stab 13 derart fixiert sind, daß die Falten 14 ortsfest gehalten sind.

7. Filterelement 10 nach einem der Ansprüche 1 bis 6, **dadurch gekennzeichnet, daß**
der Stab 13 elektrisch leitend ist.

8. Filterelement 10 nach einem der vorangehenden Ansprüche, **dadurch gekennzeichnet, daß** der Stab 13 aus Kunststoff ist.

9. Filterelement 10 nach Anspruch 8, **dadurch gekennzeichnet, daß**
die Verbindungsstellen 19 des Stabes 13 mit dem Filtermedium 11 Schmelzzonen sind, wobei der Stab 13 an dem Filtermedium 11 oder das Filtermedium 11 an dem Stab 13 angeschmolzen ist.

10. Verfahren zur Erzeugung eines Filterelementes 10 nach Anspruch 9, wobei das Filtermedium 11 in eine Vorrichtung 21 eingelegt ist, welche die Falten 14 des Filtermedium 11s erzeugt, **dadurch gekennzeichnet, daß**
- die Vorrichtung 21 über eine Aussparung verfügt, durch welche der Stab 13 durch das Filtermedium 11 gestochen wird,
- zwei Spannungsanschlüsse 30 vorgesehen sind, mit welchen der Stab 13 verbunden und somit Spannung in dem Stab 13 erzeugt wird, wodurch Wärme zum Aufschmelzen des Stabes 13 oder des Filtermediums 11 entsteht.
